# EUROPÄISCHE PATENTSCHRIFT

(11) **EP 4 137 269 B1**
(45) Veröffentlichungstag und Bekanntmachung des Hinweises auf die Patenterteilung: **10.07.2024**
(21) Anmeldenummer: 22174033.5
(22) Anmeldetag: 18.05.2022
(51) Int. Cl.: B23Q 17/22, G05B 19/401

(54) **VORRICHTUNG UND VERFAHREN ZUR FESTSTELLUNG EINER BERÜHRUNG ZWISCHEN EINEM WERKZEUG UND EINEM WERKSTÜCK**
DEVICE AND METHOD FOR DETECTING CONTACT BETWEEN A TOOL AND A WORKPIECE
DISPOSITIF ET PROCÉDÉ DE DÉTECTION D'UN CONTACT ENTRE UN OUTIL ET UNE PIÈCE

(30) Priorität: 18.08.2021 DE 102021209049
(43) Veröffentlichungstag der Anmeldung: 22.02.2023
(73) Patentinhaber: Dr. Johannes Heidenhain GmbH, 83301 Traunreut (DE)
(72) Erfinder: JOACHIMSTHALER, Ingo, 83278 Traunstein (DE); SCHMIDT, Sebastian, 84489 Burghausen (DE); MITTERREITER, Johann, 83339 Chieming (DE); METZKE, Robert, 83278 Traunstein (DE); REBELEIN, Christian, 83278 Traunstein (DE); BARTLECHNER, Alois, 83349 Palling (DE); GRUBER, Sebastian, 84375 Kirchdorf (DE)

(56) Entgegenhaltungen:
- EP-A1- 3 501 730
- EP-A1- 3 591 344
- DE-A1- 102014 204 833

## Beschreibung

### GEBIET DER TECHNIK

Die vorliegende Erfindung betrifft eine Vorrichtung zur Feststellung einer Berührung zwischen einem Werkzeug und einem Werkstück in einer Werkzeugmaschine nach Anspruch 1, sowie ein korrespondierendes Verfahren nach Anspruch 7. Sie ist vorteilhaft einsetzbar bei numerisch gesteuerten Werkzeugmaschinen, die Werkstücke durch spanabhebende Bearbeitung formen, insbesondere durch Fräsen, Drehen und Schleifen.

### STAND DER TECHNIK

Die am weitest verbreiteten Herstellungsmethoden für mechanische Werkstücke basieren auf der spanabhebenden Bearbeitung, also auf dem Zerspanen von Material. Hierbei wird von einem sogenannten Rohteil unter Einsatz von Werkzeugen gezielt Material abgetragen, so dass schließlich ein Produkt mit gewünschter Form und Funktion entsteht. Um Material abzutragen, wird das Werkstück mit einem Werkzeug in Kontakt gebracht. Die Werkzeuge weisen geometrisch bestimmte oder unbestimmte Schneiden auf.

Beispiele für Werkzeuge mit geometrisch bestimmten Schneiden sind Fräser, Bohrer oder Drehmeißel, ein Werkzeug mit unbestimmten Schneiden ist eine Schleifscheibe. Für den Schneidprozess wird häufig eines der Objekte - Werkzeug oder Werkstück - in Rotation versetzt, bevor es mit dem anderen Objekt in Kontakt gebracht wird.

Die Bearbeitung wird von einem Computer gesteuert, der unter Abarbeitung eines Fertigungsprogrammes elektrische Antriebe ansteuert, um zumindest eines der Objekte zu bewegen. Zur Feststellung der Istposition des bewegten Objektes sind Positionsmessgeräte - Drehgeber oder Längenmessgeräte - vorgesehen, deren Messwerte wiederum dem Computer zugeführt sind. Der Computer wird als CNC-Steuerung, die Werkzeugmaschine zur Durchführung der Bearbeitung als CNC-Maschine bezeichnet.

Zur Erzeugung der Rotation des Objektes ist eine sog. Spindel vorgesehen. Dabei handelt es sich um einen Elektromotor, der - direkt oder indirekt - eine Welle antreibt, an der wiederum das Objekt befestigt ist. Hier ist ein Drehgeber vorgesehen, um Drehwinkel und/oder Drehzahl der Spindel zu messen. Weiter sind Messeinrichtungen bekannt, mit denen Verlagerungen der Welle aus einer Ideallage messbar sind. Die EP 3 591 344 A1 beschreibt eine derartige Messeinrichtung.

Um das Werkstück zum Zwecke der Bearbeitung zu fixieren, sind Spannmittel vorgesehen. Da das Einspannen eines neuen Werkstücks (Rohteil) mit großen Toleranzen belegt ist und auch die Maße der Rohteile schwanken können, müssen vor dem Beginn der Bearbeitung die genaue Position des neu eingespannten Rohteils, sowie seine Maße bestimmt werden. Hierzu kommen sogenannte Taster zum Einsatz, die an Stelle eines Werkzeugs in Richtung des Werkstücks bewegt werden und ein Schaltsignal ausgeben, wenn sie in Kontakt mit dem Werkstück treten. Die CNC-Steuerung wertet das Schaltsignal aus und stellt Position und Maße des Werkstücks durch Anfahren mehrerer Positionen am Rohteil fest (Antasten). Erst dann kann die eigentliche Bearbeitung beginnen.

Ein Nachteil dieser Vorgehensweise ist der damit verbundene Zeitaufwand, da hierfür erst das Werkzeug gegen den Taster ausgewechselt und nach dem Messvorgang wieder zurückgewechselt werden muss. Ein weiterer Nachteil ist es, dass insbesondere dann, wenn Gussteile als Rohteile verwendet werden, deren Oberflächen häufig noch Schlacke-Reste aufweisen. Diese können von einem Taster nicht von der eigentlichen (Metall-) Oberfläche unterschieden werden, es kommt also zu einem Messfehler. Dies führt beispielsweise dazu, dass bei den ersten Bearbeitungsschritten weniger Material als gewünscht abgetragen wird, was wiederum die Gesamtbearbeitungszeit verlängert (die mögliche Bearbeitungstiefe wird nur durch das Metall und nicht durch die Schlacke begrenzt). DE 10 2014 204833 A1 offenbart eine Vorrichtung zur Feststellung einer Berührung zwischen einem Werkzeug und einem Werkstück.

### ZUSAMMENFASSUNG DER ERFINDUNG

Es ist eine Aufgabe der vorliegenden Erfindung, eine Vorrichtung anzugeben, mit der die Lage eines Werkstücks in einer Werkzeugmaschine einfach bestimmbar ist.

Diese Aufgabe wird gelöst durch eine Vorrichtung nach Anspruch 1.

Es wird nun eine Vorrichtung zur Feststellung einer Berührung zwischen einem Werkzeug und einem Werkstück in einer Werkzeugmaschine, bei der das Werkzeug und das Werkstück relativ zueinander bewegbar sind und das Werkzeug oder das Werkstück drehfest mit einer Welle verbunden ist, vorgeschlagen, umfassend eine Messanordnung mit einer drehfest auf der Welle angeordneten Messteilung und wenigstens einen Positionsaufnehmer, der in Bezug auf die Welle feststehend angeordnet ist, und einen Rechner, wobei
- der wenigstens eine Positionsaufnehmer geeignet ausgestaltet ist, die Messteilung abzutasten und hieraus Positionswerte zu generieren, die eine Position der Welle angeben,
- die Positionswerte dem Rechner zugeführt sind, der Mittel umfasst, die durch Auswertung eines Verlaufs der Positionswerte die Berührung zwischen Werkzeug und Werkstück feststellen und das Ergebnis der Auswertung über den Status eines Verlagerungssignals signalisieren.

Weiter ist es eine Aufgabe der vorliegenden Erfindung, ein Verfahren anzugeben, mit dem die Lage eines Werkstücks in einer Werkzeugmaschine einfach bestimmt werden kann.

Diese Aufgabe wird gelöst durch ein Verfahren nach Anspruch 7.

Es wird nun ein Verfahren zur Feststellung einer Berührung zwischen einem Werkzeug und einem Werkstück in einer Werkzeugmaschine, bei der das Werkzeug und das Werkstück relativ zueinander bewegbar sind und das Werkzeug oder das Werkstück drehfest mit einer Welle verbunden ist, vorgeschlagen, mit einer Vorrichtung, umfassend eine Messanordnung mit einer drehfest auf der Welle angeordneten Messteilung und wenigstens einen Positionsaufnehmer, der in Bezug auf die Welle feststehend angeordnet ist, und einen Rechner, wobei gemäß dem Verfahren
- die Messteilung von dem wenigstens einen Positionsaufnehmer abgetastet wird und hieraus Positionswerte generiert werden, die eine Position der Welle angeben,
- die Positionswerte dem Rechner zugeführt werden, der Mittel umfasst, mit denen durch Auswertung eines Verlaufs der Positionswerte die Berührung zwischen Werkzeug und Werkstück festgestellt und das Ergebnis der Auswertung über den Status eines Verlagerungssignals signalisiert wird.

Mit Vorteil weist die Messteilung eine Teilungsspur auf, deren Codeelemente in Umfangsrichtung der Welle angeordnet sind und durch deren Abtastung durch die Positionsaufnehmer Positionswerte gemessen werden können, die die Winkelposition der Welle angeben. In einer vorteilhaften Ausgestaltung sind drei Positionsaufnehmer zur Abtastung der Teilungsspur vorgesehen, die in Umfangsrichtung der Welle in geeigneten Abständen angeordnet sind, beispielsweise in einem Winkelabstand von je 120°. Eine Auslenkung der Welle beeinflusst nun, je nach Richtung der Auslenkung, die von den Positionsaufnehmern gemessenen Winkelpositionen, die sich als Änderung der durch die Anordnung der Positionsaufnehmer festgelegten Winkeldifferenz auswirkt. Hieraus kann wiederum Betrag und Richtung der Auslenkung der Welle ermittelt werden.

Zusätzlich zu dieser Teilungsspur kann die Messteilung eine zweite Teilungsspur aufweisen, deren Codeelemente ringförmig um den Umfang der Welle angeordnet sind. Zu deren Abtastung können wiederum drei Positionsaufnehmer vorgesehen sein, die ebenfalls in Umfangsrichtung der Welle in geeigneten Abständen angeordnet sind, im dargestellten Beispiel wiederum 120°. Aus der Abtastung der zweiten Messteilung können Auslenkungen der Welle in deren Achsrichtung gemessen werden. Auf diese Weise kann eine Drehung der Achse in Achsrichtung, also bezogen auf eine Ruhelage der Welle eine Schiefstellung der Achse, gemessen werden, die sich in einer Verkippung der ringförmigen Codeelemente bezogen auf die Positionsaufnehmer auswirkt.

Die Positionswerte der Positionsaufnehmer sind im Rechner einem Verlagerungsrechner zugeführt, der kontinuierlich wenigstens einen Verlagerungswert generiert, der ein Maß für die Auslenkung der Welle, hervorgerufen durch eine auf die Welle wirkende Kraft, ist. Zur Auswertung des Verlaufs der Verlagerungswerte sind im Rechner geeignete Mittel vorgesehen. Besonders vorteilhafte Ausführungsformen ergeben sich mit folgenden Mitteln:
In einer ersten vorteilhaften Ausführungsform umfassen die Mittel einen Schwellenwertbestimmer, ausgestaltet zum Bestimmen eines Schwellenwertes der eintreffenden Verlagerungswerte im Leerlauf und ohne Berührung zwischen Werkzeug und Werkstück, sowie einen Vergleicher zum Vergleich des Schwellenwertes mit aktuell eintreffenden Verlagerungswerten. Dabei kann der Schwellenwertbestimmer ausgestaltet sein, jeweils zu Beginn des Verfahrens einen Schwellenwert zu bilden, oder aber kontinuierlich neue Schwellenwerte zu bilden, so dass der Einfluss einer Drift der Verlagerungswerte verringert wird. In einer vereinfachten Form stellt der Schwellenwertbestimmer lediglich einen vorab bestimmten und gespeicherten Schwellenwert zur Verfügung.

In einer zweiten vorteilhaften Ausführungsform umfassen die Mittel einen Differenzierer, ausgestaltet zur Bildung des Differenzenquotienten aus aufeinanderfolgend eintreffenden Verlagerungswerten und dem Zeitintervall ihres Eintreffens, sowie einen Vergleicher zum Vergleich der Differenzenquotienten mit vorab gespeicherten Schwellenwerten.

In einer weiteren vorteilhaften Ausführungsform umfassen die Mittel einen Frequenzanalysator, der den Verlauf der Verlagerungswerte im Frequenzbereich auswertet. Durch gezielte Auswertung der spektralen Leistungsdichte einzelner Frequenzbänder, die durch die Drehzahl der Welle und die Anzahl der Schneiden des Werkzeugs bestimmt sind, kann auf eine Berührung zwischen Werkzeug und Werkstück geschlossen werden.

In einer Variante dieser Ausführungsform können dem Frequenzanalysator auch direkt die Positionswerte wenigstens eines Positionsaufnehmers zugeführt sein, so dass auf den Verlagerungsrechner verzichtet werden kann.

In einer weiteren vorteilhaften Ausführungsform umfassen die Mittel ein Kl-Modul, das den Verlauf der Verlagerungswerte mit Methoden der künstlichen Intelligenz, insbesondere durch Mustererkennung, auswertet. Dies ist besonders vorteilhaft, wenn die Verlagerungswerte große statistische Schwankungen aufweisen.

Auch diese Ausführungsform kann dahingehend variiert werden, dass dem KI-Modul direkt die Positionswerte wenigstens eines Positionsaufnehmers zugeführt sind, so dass kein Verlagerungsrechner benötigt wird.

Um das Zusammenspiel des Rechners mit anderen Komponenten, beispielsweise einem Steuergerät der Werkzeugmaschine, zu ermöglichen, hat es sich als vorteilhaft herausgestellt, den Rechner mit einem Befehlskanal auszustatten, über den dem Rechner Befehle und ggf. Parameter zuführbar sind. Ein Befehl ist beispielsweise ein Startbefehl, der das erfindungsgemäße Verfahren startet. Parameter können Daten sein, die Randbedingungen für die Auswertung der Positionswerte im Rechner definieren, beispielsweise die Drehzahl der Welle, Informationen zum Werkzeug (Art, Durchmesser, Anzahl der Schneiden...), etc.

Der Befehlskanal kann zusammen mit dem Antwortdatenkanal als digitale, mit Vorteil serielle, Schnittstelle ausgeführt sein.

Weitere vorteilhafte Ausgestaltungen der erfindungsgemäßen Vorrichtung, bzw. des erfindungsgemäßen Verfahrenes, sind den jeweils abhängigen Ansprüchen zu entnehmen, sowie den nachfolgend beschriebenen Ausführungsbeispielen.

### KURZE BESCHREIBUNG DER ZEICHNUNGEN

Es zeigt
- Figur 1: eine erfindungsgemäße Vorrichtung in Verbindung mit Komponenten einer Werkzeugmaschine,
- Figur 2: ein Ausführungsbeispiel einer erfindungsgemäßen Messanordnung,
- Figur 3: eine für die Messanordnung nach Figur 2 geeignete Messteilung,
- Figur 4: eine erste Ausführungsform eines Rechners einer erfindungsgemäßen Vorrichtung,
- Figur 5: ein erstes Ausführungsbeispiel zur Verwendung einer erfindungsgemäßen Vorrichtung in Verbindung mit einer Werkzeugmaschine,
- Figur 6: eine weitere Ausführungsform eines Rechners einer erfindungsgemäßen Vorrichtung,
- Figur 7: ein weiteres Ausführungsbeispiel zur Verwendung einer erfindungsgemäßen Vorrichtung in Verbindung mit einer Werkzeugmaschine,
- Figur 8: eine weitere Ausführungsform eines Rechners einer erfindungsgemäßen Vorrichtung,
- Figur 9: ein weiteres Ausführungsbeispiel zur Verwendung einer erfindungsgemäßen Vorrichtung in Verbindung mit einer Werkzeugmaschine,
- Figur 10: eine weitere Ausführungsform eines Rechners einer erfindungsgemäßen Vorrichtung,
- Figur 11: eine weitere Ausführungsform eines Rechners einer erfindungsgemäßen Vorrichtung,
- Figur 12: ein weiteres Ausführungsbeispiel einer erfindungsgemäßen Messanordnung,
- Figur 13: eine für die Messanordnung nach Figur 12 geeignete Messteilung und
- Figur 14: eine weitere Ausführungsform eines Rechners einer erfindungsgemäßen Vorrichtung.

### BESCHREIBUNG DER AUSFÜHRUNGSFORMEN

In der nachfolgenden Beschreibung von vorteilhaften Ausführungsformen der vorliegenden Erfindung werden Bezugszeichen von Komponenten und Funktionsgruppen, die in einer Figur beschrieben werden, in den nachfolgenden Figuren beibehalten.

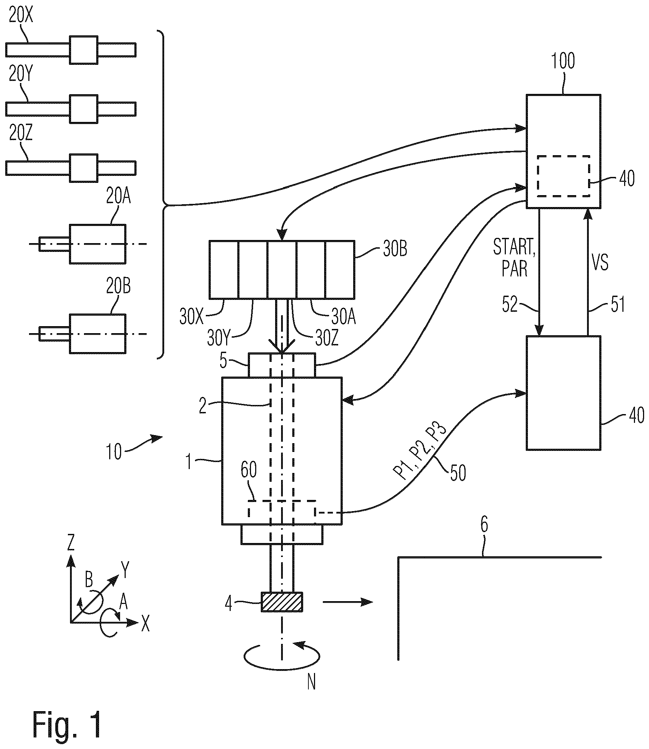

Figur 1 zeigt eine erfindungsgemäße Vorrichtung in Verbindung mit Komponenten einer Werkzeugmaschine, in diesem Fall einer 5-Achs-Fräsmaschine. Sie weist eine Motorspindel 10 auf, sowie je Bewegungsachse einen Antrieb und eine Positionsmesseinrichtung. Zur Steuerung von Bewegungsabläufen, insbesondere zur Bearbeitung eines Werkstücks 6, ist ein Steuergerät 100 vorgesehen.

Die zentrale Komponente der Motorspindel 10 ist ein Spindelmotor 1 mit einer Welle 2. An einem Ende der Welle 2 ist ein Werkzeug 4 (beispielsweise ein Fräswerkzeug) drehfest mit der Welle 2 verbunden, so dass es mit dieser rotiert. Für die Befestigung des Werkzeugs 4 an der Welle 2 ist eine (nicht dargestellte) Werkzeugaufnahme vorgesehen, beispielsweise ein Hohlschaftkegel. Ebenso mechanisch mit der Welle 2 gekoppelt ist ein Winkelmessgerät 5 (Drehgeber). Die Kopplung erfolgt über eine (nicht dargestellte) mechanische Kupplung, die eine drehbare Welle des Winkelmessgerätes 5 mit der Welle 2 verbindet. Auf diese Weise sind Winkelposition und/oder Anzahl der zurückgelegten Umdrehungen der Welle 2 mit dem Winkelmessgerät 5 messbar. Die Lagerung der Welle 2 im Gehäuse des Spindelmotors 1 erfolgt beispielsweise über Wälzlager.

Zur Bearbeitung des Werkstücks 6 wird die Welle 2 des Spindelmotors 1 in Rotation versetzt und dreht sich mit einer Drehzahl N. Zur Drehzahlregelung dient die vom Winkelmessgerät 5 gemessene Winkelposition. Das Werkzeug 4 wird durch eine Relativbewegung der Motorspindel 10 bezogen auf das Werkstück 6 mit diesem in Kontakt gebracht. So wird beispielsweise bei einer Fräsbearbeitung die gewünschte Kontur aus dem Werkstück 6 gefräst. Die Relativbewegung kann entlang linearer Antriebsachsen X, Y, Z erfolgen, zusätzlich können auch sogenannte Schwenkachsen A, B vorgesehen sein, so dass im dargestellten Beispiel eine Bewegung in fünf Bewegungsachsen X, Y, Z, A, B möglich ist. Die Bewegung der einzelnen Achsen wird über (lediglich angedeutete) Antriebe 30X, 30Y, 30Z, 30A, 30B, die wiederum entsprechende mechanische Komponenten (nicht dargestellt) antreiben, gesteuert. Zur Feststellung der Position der jeweiligen Bewegungsachsen X, Y, Z, A, B sind in der Werkzeugmaschine weitere Positionsmesseinrichtungen 20X, 20Y, 20Z, 20A, 20B vorgesehen.

Es sei an dieser Stelle explizit darauf hingewiesen, dass es sich bei der Bewegung der Achsen um Relativbewegungen handelt, es somit gleichwertig zu betrachten ist, ob ein Antrieb die Motorspindel 10 und damit das Werkzeug 4, oder das Werkstück 6 bewegt.

Ebenso sei darauf hingewiesen, dass die vorliegende Erfindung auch bei Werkzeugmaschinen anwendbar ist, bei denen nicht das Werkzeug, sondern das Werkstück drehfest mit der Welle verbunden ist und mit dieser rotiert.

Typische Beispiele hierfür sind Drehmaschinen und Maschinen zur Schleifbearbeitung.

Die Steuerung einer derart ausgestalteten Werkzeugmaschine erfolgt programmgesteuert von einem Steuergerät 100. Dieses umfasst einen Computer mit geeignetem Betriebssystem, auf dem entsprechende Programme ablaufen. Der Computer weist übliche Peripheriegeräte wie Monitor, Eingabegeräten, Speicher,... etc., auf. Bei dem Steuergerät 100 kann es sich um eine sog. Numerische Steuerung handeln.

Messwerte der Positionsmesseinrichtungen 20X, 20Y, 20Z, 20A, 20B und des Winkelmessgeräts 5 sind dem Steuergerät 100 über geeignete Signalübertragungskanäle zugeführt. Zur Steuerung der Antriebe 30X, 30Y, 30Z, 30A, 30B und des Spindelmotors 1 durch das Steuergerät 100 sind ebenfalls geeignete Signalübertragungskanäle vorgesehen. Die Signalübertragungskanäle können, je nach Anforderung, zur Übertragung analoger oder digitaler Signale ausgelegt sein. Insbesondere können die Signalübertragungskanäle digitale Datenschnittstellen, mit Vorteil serielle Datenschnittstellen umfassen.

Die Werkzeugmaschine ist nun mit einer erfindungsgemäßen Vorrichtung ausgestattet, die einen Rechner 40 und eine Messanordnung 60 umfasst.

Die Messanordnung 60 ist geeignet ausgestaltet, um Verlagerungen (Auslenkungen) der Welle 2 festzustellen. Sie ist an der Welle 2 angeordnet. Mit der Messanordnung 60 sind durch Abtastung wenigstens einer über den Umfang der Welle 2 angeordneten und mit dieser rotierenden Messteilung mit wenigstens einem Positionsaufnehmer, der bezogen auf die Welle 2 feststehend angeordnet ist, Positionswerte generierbar, die eine Position der Welle 2 angeben. Verlagerungen der Welle 2 bewirken Änderungen der Positionswerte, so dass durch Auswertung der generierten Positionswerte Rückschlüsse auf die Verlagerung der Welle 2 gezogen werden können.

Da die Auswirkung einer Auslenkung der Welle 2 auf die Positionswerte abhängig ist von der Richtung, aus der eine Kraft auf die Welle einwirkt, ergeben sich besonders vorteilhafte Ausführungsformen der Messanordnung 60, wenn mehrere Positionsaufnehmer vorhanden sind, insbesondere zwei oder drei Positionsaufnehmer, die in Umfangsrichtung der Welle 2 versetzt angeordnet sind. Sind zwei Positionsaufnehmer vorhanden, so sind diese mit Vorteil in einem Winkelabstand von 180° angeordnet, bei drei Positionsaufnehmern ist eine gleichmäßige Verteilung über den Umfang der Welle 2, also ein Winkelabstand von jeweils 120° zwischen den Positionsaufnehmern, besonders vorteilhaft.

Bei der Messanordnung 60 kann es sich um eine aus der EP 3 591 344 A1 bekannte Messanordnung handeln.

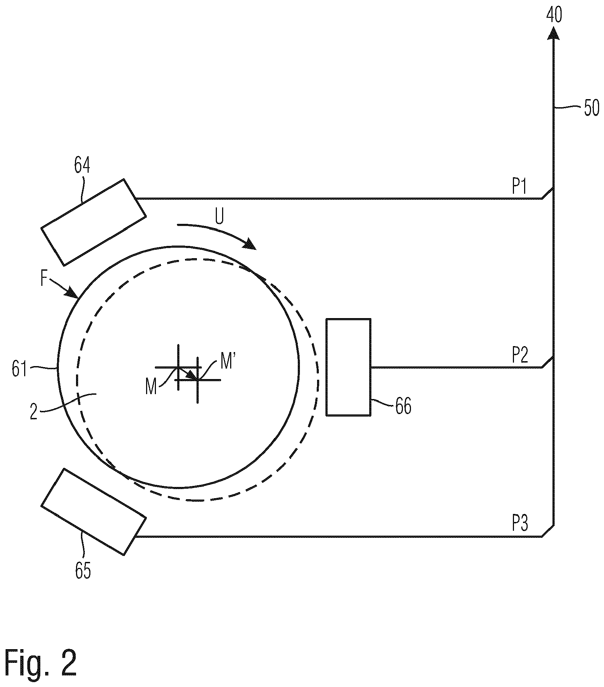

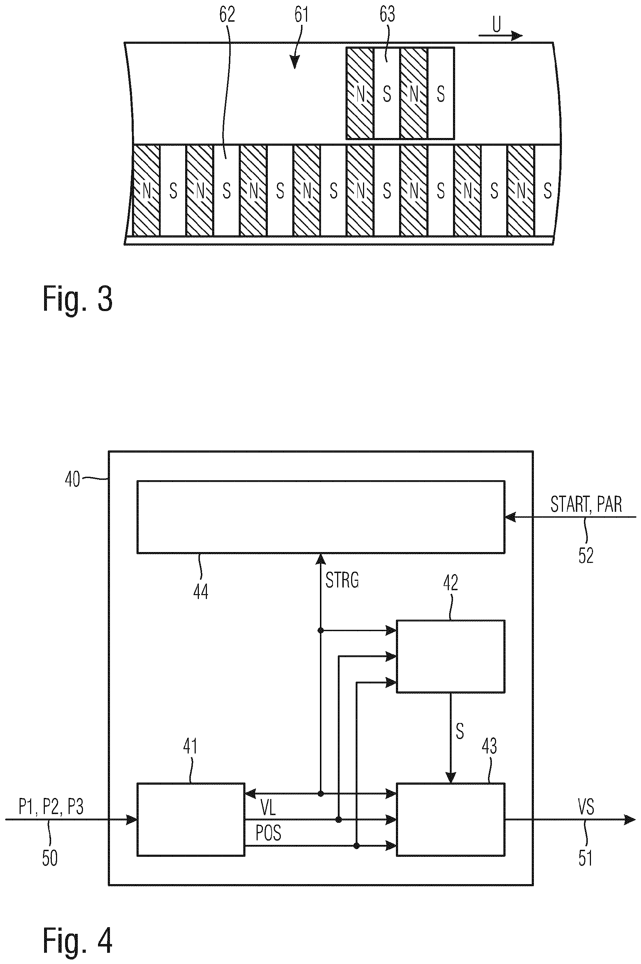

Im vorliegenden Beispiel sind drei Positionsaufnehmer vorgesehen, geeignete Messanordnungen 60 werden im Weiteren in Verbindung mit den Figuren 2 und 3 detailliert beschrieben.

Die Positionswerte P1, P2, P3 der Messanordnung 60, die von den drei Positionsaufnehmern generiert werden, sind über einen Signalübertragungskanal 50 zur Auswertung dem Rechner 40 zugeführt. Es sei darauf hingewiesen, dass im Rahmen dieses Dokumentes unter der Bezeichnung "Positionswert" jede Art von Signal zu verstehen ist, das eine Position der Welle 2 repräsentiert. Es kann sich bei Positionswerten somit um analoge oder digitale Signale handeln. Die Verarbeitung der Positionswerte im Rechner 40 erfolgt in jedem Fall digital. Wo die Digitalisierung, bzw. Konvertierung in digitale Datenwörter erfolgt (bereits in den Positionsaufnehmern, oder erst im Rechner), ist dabei unerheblich. Somit kann die Übertragung der Positionswerte P1, P2, P3 zum Rechner analog oder digital erfolgen. Besonders vorteilhaft ist es, wenn die Positionsaufnehmer bereits digitale Positionswerte P1, P2, P3 generieren und die Übertragung dieser digitalen Datenworte über digitale Schnittstellen, insbesondere serielle Schnittstellen erfolgt.

Der Rechner 40 umfasst Mittel, die durch Auswertung des Verlaufs der Positionswerte P1, P2, P3, die von der Messanordnung 60 eintreffen, die Berührung zwischen Werkzeug 4 und Werkstück 6 feststellen. Das Ergebnis der Auswertung wird durch den Status eines Verlagerungssignals VS signalisiert, das über einen Ausgangsdatenkanal 51 ausgegeben wird, im vorliegenden Beispiel an das Steuergerät 100. Der Ausgangsdatenkanal 51 kann eine einfache Signalleitung sein, über die der Status des Verlagerungssignals VS in Form eines Spannungspegels ausgegeben wird. Der Ausgangsdatenkanal 51 kann aber auch als digitale Datenschnittstelle ausgebildet sein, über die der Status des Verlagerungssignals VS als Datenwort oder Teil eines Datenwortes ausgegeben wird.

Mit Vorteil sind Funktionen des Rechners 40 steuerbar, beispielsweise durch Befehle, die über einen Befehlskanal 52 von einer externen Einheit, in diesem Fall vom Steuergerät 100, eintreffen. Im vorliegenden Beispiel kann die Funktion des Rechners 40 durch einen Startbefehl START gestartet werden. Darüber hinaus kann vorgesehen sein, dem Rechner 40 über den Befehlskanal 52 Informationen (Parameter PAR) zuzuführen, die er zum Auswerten der Positionswerte P1, P2, P3 benötigt, beispielsweise die Drehzahl der Welle 2, die Vorschubgeschwindigkeit der Motorspindel 10, oder Informationen über das Werkzeug 2 (Art, Durchmesser, Anzahl der Schneiden, ...).

Der Rechner 40 kann, wie dargestellt, ein eigenständiges Gerät sein, er kann aber auch als ein Modul, das innerhalb des Steuergerätes 100 angeordnet ist, ausgeführt sein (gestrichelt gezeichnet). Funktionsmodule, die die Funktionen des Rechners 40 ausführen, können, teilweise oder vollständig, durch ein Computerprogramm realisiert sein, beispielsweise lauffähig auf einem Computer (PC), der vom Steuergerät 100 oder vom Rechner 40 selbst umfasst ist. Dies gilt für alle Ausführungsbeispiele von Rechnern, die in diesem Dokument beschrieben sind.

Der Ausgangsdatenkanal 51 und der Befehlskanal 52 können gemeinsam als eine bidirektionale Schnittstelle, mit Vorteil als serielle Schnittstelle, ausgebildet sein.

Figur 2 zeigt ein Ausführungsbeispiel einer Messanordnung 60. Sie umfasst eine Messteilung 61 mit wenigstens einer Teilungsspur, sowie drei Positionsaufnehmer 64, 65, 66.

Die Messteilung 61 ist drehfest auf der Welle 2 angeordnet, so dass sie mit dieser rotiert. Dabei können Codeelemente, die die Messteilung 61 bilden, direkt auf der Welle 2 angeordnet sein, beispielsweise durch Magnetisierung, wenn ein magnetisches Abtastprinzip verwendet wird, oder durch Bildung von reflektierenden und nicht-reflektierenden Bereichen bei einem optischen Abtastprinzip. Alternativ kann die Messteilung 61 auf einem Teilungsträger angeordnet sein, der wiederum drehfest mit der Welle 2 verbunden ist.

Figur 3 zeigt hierzu eine geeignete Messteilung 61 mit einer Teilungsspur 62. Die Codeelemente der Teilungsspur 62 sind in Umfangsrichtung U der Welle 2 hintereinander angeordnet. Im dargestellten Beispiel ist die Teilungsspur 62 als inkrementelle Teilungsspur ausgeführt und weist insbesondere ein magnetisches Abtastprinzip auf, d.h. die Teilungsspur besteht aus einer regelmäßigen Abfolge von magnetischen Plus- und Minuspolen, die in Umfangsrichtung U der Welle 2 angeordnet sind. Die Messteilung 61 kann zusätzlich eine Referenzspur 63 aufweisen, mit der an einer definierten Winkelposition durch eine kurze Abfolge von magnetischen Plus- und Minuspolen (Referenzmarke) eine Referenzposition für die prinzipbedingt relative Winkelmessung der inkrementellen Teilungsspur festgelegt wird. Auf diese Weise wird eine absolute Winkelmessung ermöglicht. Alternativ kann die Referenzmarke auch in der Teilungsspur 62 integriert sein.

Die Teilungsspur 62 kann auch digital codiert sein, so dass auch ohne Referenzspur 63 jederzeit eine absolute Winkelmessung möglich ist. Besonders vorteilhaft ist es, wenn die Codeelemente der Teilungsspur 62 in Form einer sequentiellen Pseudozufallsfolge (Pseudo Random Code, PRC) angeordnet sind.

Im Ausführungsbeispiel in Figur 2 sind die Positionsaufnehmer 64, 65, 66 in regelmäßigen Winkelabständen in Umfangsrichtung der Welle 2 angeordnet, d.h. in einem Winkelabstand von 120°. Die Positionsaufnehmer 64, 65, 66 sind bezogen auf die Welle 2 feststehend angeordnet, so dass sich bei einer Rotation der Welle 2 die Messteilung 61 an den Positionsaufnehmern 64, 65, 66 vorbeibewegt. Durch Abtastung der Messteilung 61 mit den Positionsaufnehmern 64, 65, 66 ist so die Winkelposition der Welle 2 messbar. Wirkt nun eine Kraft F auf die Welle 2, so wird diese ausgelenkt, d.h. der Drehmittelpunkt M verschiebt sich (in Figur 2 ist der verschobene Drehmittelpunkt mit M' bezeichnet). Wie durch den gestrichelt gezeichneten Kreis angedeutet, verschiebt sich mit der Welle 2 auch die Messteilung 61 bezogen auf die Positionsaufnehmer 64, 65, 66. Dies wirkt sich auf die Winkelmessung der Positionsaufnehmer 64, 65, 66 aus, so dass durch Auswertung des Verlaufs der Positionswerte P1, P2, P3 einzelner Positionsaufnehmer 64, 65. 66 oder/und Änderung der Winkeldifferenz zwischen den Positionswerten P1, P2, P3 der Positionsaufnehmer 64, 65, 66 Rückschlüsse auf den Betrag und ggf. die Richtung der auf die Welle 2 einwirkenden Kraft F gezogen werden können.

Die von den Positionsaufnehmern 64, 65, 66 generierten Positionswerte P1, P2, P3 mit der gemessenen Winkelposition sind zur Auswertung über den Signalübertragungskanal 50 dem Rechner 40 zuführbar.

Figur 4 zeigt eine Ausführungsform eines Rechners 40. Der Rechner 40 umfasst einen Verlagerungsrechner 41, einen Schwellenwertbestimmer 42, einen Vergleicher 43 und eine Ablaufsteuerung 44.

Der Verlagerungsrechner 41 ist geeignet ausgestaltet, um im laufenden Betrieb kontinuierlich in konstanten Zeitabständen aus den eintreffenden Positionswerten P1, P2, P3 Verlagerungswerte VL zu bestimmen, die den Betrag der Auslenkung der Welle 2 aus einer Ruhelage angeben, und sie an den Schwellenwertbestimmer 42 und den Vergleicher 43 auszugeben. Die Zeitabstände sind so gewählt, dass je Umdrehung der Welle 2 wenigstens ein Verlagerungswert VL generiert wird.

Der Generierung der Verlagerungswerte VL kann, wie oben bereits erwähnt, die Auswertung des Verlaufs einzelner Positionswerte P1, P2, P3, oder/und die Auswertung der Differenz der Positionswerte P1, P2, P3 mehrerer Positionsaufnehmer 64, 65, 66 zugrunde liegen.

Optional kann der Verlagerungsrechner 41 aus den Positionswerten P1, P2, P3 zusätzlich eine Winkelposition POS berechnen und an den Schwellenwertbestimmer 42 und/oder den Vergleicher 43 ausgeben, so dass neben dem Betrag auch die Richtung der Auslenkung der Welle 2 ausgewertet werden kann. Darüber hinaus kann vorgesehen sein, die Winkelposition POS über den Ausgangsdatenkanal 51 an das Steuergerät 100 auszugeben, so dass beispielsweise auf das Winkelmessgerät 5 verzichtet werden kann.

Der Schwellenwertbestimmer 42 bestimmt im Leerlauf, also bei rotierender Welle 2 und ohne Kontakt zwischen dem Werkzeug 4 und dem Werkstück 6, aus Verlagerungswerten VL, die während wenigstens einer vollständigen Umdrehung der Welle 2 erfasst wurden, einen Schwellenwert S, der dem Vergleicher 43 zugeführt ist. Der Schwellenwert S ist so bestimmt, dass ein Vergleich mit aktuell eintreffenden Verlagerungswerten VL im Vergleicher 43 erlaubt festzustellen, ob sich die Motorspindel 10 weiter im Leerlauf befindet (kein Kontakt zwischen Werkzeug 4 und Werkstück 6), oder nicht.

Die Ermittlung des Schwellenwertes S kann durch die Berechnung eines Mittelwertes aus den Verlagerungswerten VL, die während wenigstens einer, mit Vorteil einer Vielzahl vollständiger Umdrehungen der Welle 2 erfasst wurden, und anschließender Multiplikation mit einem Sicherheitsfaktor oder Addition einer Konstante erfolgen. Alternativ kann als Schwellenwert S ein Maximalwert, ermittelt aus einer Vielzahl von Verlagerungswerten VL, herangezogen werden, der dann ebenfalls mit einem Sicherheitsfaktor multipliziert wird, oder zu dem eine Kontante addiert wird. Der Sicherheitsfaktor, bzw. die Konstante, ist jeweils so gewählt, dass der resultierende Schwellenwert S auch bei statistischen Schwankungen der Verlagerungswerte VL im Leerlauf nicht überschritten wird.

Der Vergleicher 43 bildet schließlich durch Vergleich der vom Verlagerungsrechner 41 eintreffenden Verlagerungswerte VL mit dem Schwellenwert S ein Verlagerungssignal VS, dessen Status angibt, ob der Schwellenwert S überschritten wurde und gibt das Verlagerungssignal VS über den Ausgangsdatenkanal 51 an das Steuergerät 100 aus. Der Vergleich kann direkt zwischen dem Schwellenwert S und einzelnen eintreffenden Verlagerungswerten VL erfolgen, so dass bereits eine einzelne Überschreitung des Schwellenwertes S durch einen Verlagerungswert VL eine Änderung des Status des Verlagerungssignals VS bewirkt. Alternativ kann der Vergleich auch zwischen dem Schwellenwert S und einem Mittelwert mehrerer Verlagerungswerte VL, insbesondere einem Mittelwert wenigstens aller innerhalb einer Umdrehung der Welle 2 ermittelten Verlagerungswerte VL, erfolgen.

Die Abläufe im Rechner 40 werden von der Ablaufsteuerung 44 gesteuert, der über den Befehlskanal 52 das Startsignal START und ggf. Parameter PAR zugeführt sind. Die Steuerung erfolgt über Steuersignale STRG, die an die Funktionsmodule (Verlagerungsrechner 41, Schwellenwertbestimmer 42, Vergleicher 43) ausgegeben werden. Die Steuersignale STRG können auch Rückmeldungen der Funktionsmodule an die Ablaufsteuerung 44 umfassen. Nach dem Eintreffen des Startsignals START initiiert die Ablaufsteuerung 44 folgende Verfahrensschritte:
- Kontinuierliche Ermittlung von Verlagerungswerten VL aus Positionswerten P1, P2, P3 in konstanten Zeitabständen im Verlagerungsrechner 41 und Ausgabe der Verlagerungswerte VL an den Schwellenwertbestimmer 42 und den Vergleicher 43.
- Bildung eines Schwellenwertes S der Verlagerung der Welle 2 im Schwellenwertbestimmer 42 aus einer Mehrzahl von aufeinanderfolgenden Verlagerungswerten VL und anschließender Erhöhung durch Multiplikation mit einem Sicherheitsfaktor oder Addition einer Konstante. Ausgabe des Schwellenwertes S an den Vergleicher 43.
- Vergleich von Verlagerungswerten VL, die vom Verlagerungsrechner 41 eintreffen, mit dem Schwellenwert S im Vergleicher 43 und Signalisierung des Ergebnisses des Vergleichs durch den Status des Verlagerungssignales VS.

Dieses Verfahren ist geeignet, um den ersten Kontakt des Werkzeugs 4, je nach Art der Bearbeitung beispielsweise ein Fräswerkzeug oder eine Schleifscheibe, mit dem zu bearbeitenden Werkstück 6 und somit den Beginn der Bearbeitung zu bestimmen. Hierzu wird der Schwellenwert S an einer Position bestimmt, an der sicher kein Kontakt zwischen Werkzeug 4 und Werkstück 6 besteht. Anschließend werden Werkzeug 4 und Werkstück 6 mittels wenigstens einem Antrieb einander angenähert, bis ein mechanischer Kontakt auftritt. Mit Vorteil wird dieses Verfahren bei rotierender Welle 2 durchgeführt, weil dann der erste Eingriff einer Schneide des Werkzeugs 4 in das Werkstück 6 feststellbar ist.

In einer vereinfachten Ausführungsform ist der Schwellenwert S ein konstanter Wert, der im Schwellenwertbestimmer 42 abgespeichert ist. In diesem Fall ist der Verfahrensschritt der Bildung und Ausgabe des Schwellenwertes S auf die Übertragung des gespeicherten Schwellenwertes S an den Vergleicher 43 nach Eintreffen des Startbefehls START reduziert.

An Stelle des Startbefehls START kann beispielsweise auch das Einschalten einer Versorgungsspannung des Rechners 40 als Startbefehl interpretiert werden.

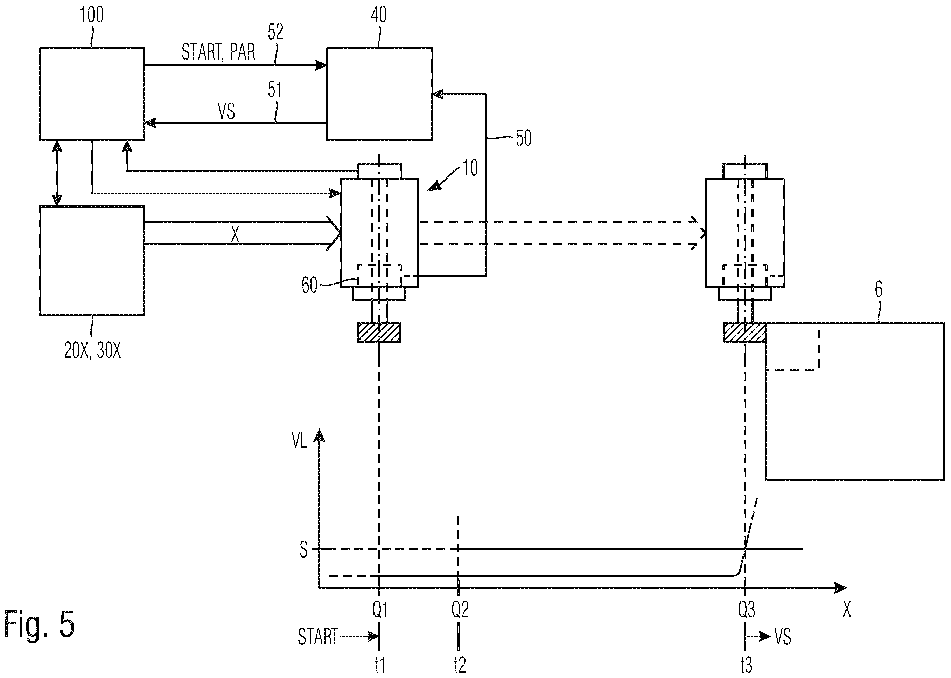

Figur 5 zeigt ein Ausführungsbeispiel zur Verwendung einer erfindungsgemäßen Vorrichtung in Verbindung mit einer Werkzeugmaschine. Die Werkzeugmaschine ist in diesem Beispiel auf die minimal notwendigen Komponenten zur erfindungsgemäßen Funktion reduziert und weist eine Motorspindel 10, einen Antrieb 20X mit einer Positionsmesseinrichtung 30X zur Messung einer Position des Antriebs 20X in einer Bewegungsrichtung X und ein Steuergerät 100 auf.

Weiter umfasst die Werkzeugmaschine eine Messanordnung 60 und einen Rechner 40.

Der Antrieb 20X ist geeignet ausgestaltet, um die Motorspindel 10 in der Bewegungsrichtung X zu bewegen. Im dargestellten Beispiel bewegt der Antrieb 20X die Motorspindel 10 auf das Werkstück 6 zu, bis das Werkzeug 4 mit dem Werkstück 6 in Kontakt tritt. Durch die bekannte Geometrie der Werkzeugmaschine ist durch die mit der Positionsmesseinrichtung 30X gemessene Position des Antriebs 20X auch die Position des Werkzeugs 4 bekannt.

Die Bewegung des Antriebs 20X, die Rotation der Welle 2, sowie die Interaktion mit dem Rechner 40 sind durch ein auf dem Steuergerät 100 lauffähiges Computerprogramm steuerbar.

Wie einleitend bereits beschrieben, ist die genaue Position eines neu zu bearbeitenden Werkstücks 6, das mittels Spannmitteln im Arbeitsbereich der Motorspindel 10 festgespannt wird, noch unbekannt. Bekannt sind lediglich die Grobposition und -ausrichtung des Werkstückes, die durch die Spannmittel vorgegeben sind. Ebenso bekannt sind die Abmessungen des Werkstückes 6 (Werkstück-Rohling). Vor der Bearbeitung der Werkstückkontur ist es notwendig, die exakte Position des Werkstücks 6 zu bestimmen. Ein bevorzugtes Verfahren wird im Folgenden anhand des in Figur 5 dargestellten Signaldiagramms beschrieben:
In der Ausgangsposition befindet sich die Motorspindel 10 an der Position Q1. Zu einem Zeitpunkt t1 steuert das Steuergerät 100 den Spindelmotor 1 an, so dass dieser mit der Drehzahl N rotiert. Die Drehzahlregelung erfolgt mit Hilfe des Winkelmessgeräts 5, der die Winkelposition der Welle 2 misst. Außerdem signalisiert das Steuergerät 100 dem Antrieb 20X, die Motorspindel 10 in Bewegungsrichtung X auf das Werkstück 6 zuzubewegen und sendet den Startbefehl START an den Rechner 40.

Der Rechner 40 führt nun das in Verbindung mit Figur 4 beschriebene Verfahren aus, d.h. der Verlagerungsrechner 41 ermittelt kontinuierlich Verlagerungswerte VL und der Schwellenwertbestimmer 42 ermittelt hieraus den Schwellenwert S. Zu einem Zeitpunkt t2 an einer Position Q2 steht der Schwellenwert S zur Verfügung und im Vergleicher 43 erfolgt der Vergleich zwischen dem Schwellenwert S und den eintreffenden Verlagerungswerten VL. Nahe einer Position Q3 kommt es schließlich zu einer Berührung zwischen Werkzeug 4 und Werkstück 6. In anderen Worten kommt es zu einem Eingriff einer Werkzeugschneide in das Material des Werkstücks 6. Die hierbei auftretende Kraft F verursacht einen steilen Anstieg des Verlaufs der Verlagerungswerte VL, der zum Zeitpunkt t3 an der Position Q3 den Schwellenwert S überschreitet. Dies wird wiederum durch eine Statusänderung des Verlagerungssignals VS signalisiert.

Signalisiert der Status des Verlagerungssignals VS die Berührung zwischen Werkzeug 4 und Werkstück 6, dann speichert das Steuergerät 100 den aktuellen Positionswert der Positionsmesseinrichtung 30X als Position des Werkstückes 6 in der Bewegungsrichtung X und stoppt den Antrieb 20X, bzw. kehrt die Bewegungsrichtung um, so dass sich Werkzeug 4 und Werkstück 6 wieder voneinander entfernen. Alternativ kann das Steuergerät 100 aber auch direkt zur Bearbeitung des Werkstücks 6 übergehen und ggf. die Vorschubgeschwindigkeit des Antriebs 20X oder die Drehzahl der Welle 2 entsprechend anpassen.

Was in diesem Beispiel anhand nur einer Bewegungsrichtung beschrieben wurde, wird in der Praxis in mehreren Bewegungsrichtungen (z.B. fünf Bewegungsrichtungen, wie in Figur 1 dargestellt) wiederholt durchgeführt, bis ausreichend viele Kontaktpunkte (Werkstückkoordinaten) vorliegen, um die exakte Position des Werkstücks 6, bzw. des Werkstück-Rohlings, zu kennen und die eigentliche Bearbeitung beginnen zu können.

Da es sich hier um ein spanabhebendes Verfahren handelt, ist es vorteilhaft, wenn die Berührungspunkte zwischen Werkzeug 4 und Werkstück 6 so gewählt werden, dass sie in Bereichen liegen, die später bei der Bearbeitung des Werkstücks 6 ohnehin entfernt werden (in Figur 5 ist die Endkontur des fertig bearbeiteten Werkstücks 6 durch eine gestrichelte Linie angedeutet), oder durch ein definiertes Übermaß des Werkstücks 6 gewährleistet ist, dass die Endkontur des Werkstücks 6 durch das erfindungsgemäße Verfahren nicht beeinträchtigt wird.

Selbst wenn der Werkstück-Rohling Verunreinigungen der Oberfläche, wie beispielsweise Schlacke-Reste, aufweist, kann mit dem beschriebenen Verfahren die Berührung zwischen dem Werkzeug 4 und der tatsächlichen Oberfläche des Werkstücks 6 erkannt werden, da das Werkzeug die Verunreinigungen ohne eine signifikante Auslenkung der Welle 2 durchdringt.

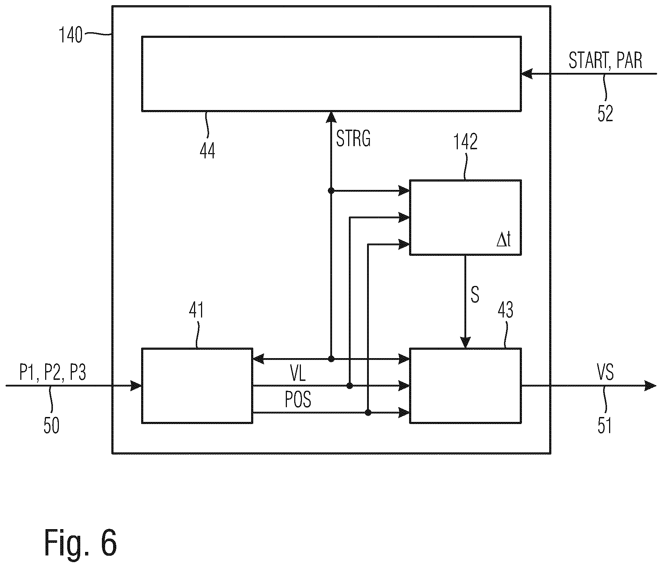

Figur 6 zeigt ein weiteres Ausführungsbeispiel eines Rechners 140. Im Vergleich zum Rechner 40 ist der Schwellenwertbestimmer 142 ausgestaltet, im laufenden Betrieb bis zur Feststellung der Berührung zwischen Werkzeug 4 und Werkstück 6 kontinuierlich in Zeitintervallen Δt Schwellenwerte S zu ermitteln und dem Vergleicher 43 zuzuführen. Dies ist besonders vorteilhaft, wenn die Positionswerte P1, P2, P3, bzw. die daraus generierten Verlagerungswerte VL einer Drift unterliegen, d.h. dass die Verlagerungswerte VL im Leerlauf bei rotierender Welle 2 auch ohne Kontakt zwischen Werkzeug 4 und Werkstück 6 variieren. Ursache für eine Drift kann beispielsweise eine lokale, asymmetrische Erwärmung der Messanordnung 60 sein, so dass die Positionsaufnehmer 64, 65, 66 durch wärmebedingte Ausdehnungseffekte ihre Position zueinander ändern, was sich wiederum als eine Änderung der Positionswerte P1, P2, P3 auswirkt. Ebenso können wärmebedingte Ausdehnungseffekte die Lagerung der Welle 2 beeinflussen und diese auch ohne äußere Krafteinwirkung verlagern. Die Auswirkungen derartiger Effekte können zwar in vielen Anwendungen vernachlässigt werden, ihre Berücksichtigung kann die Empfindlichkeit und Genauigkeit einer erfindungsgemäßen Vorrichtung jedoch signifikant erhöhen.

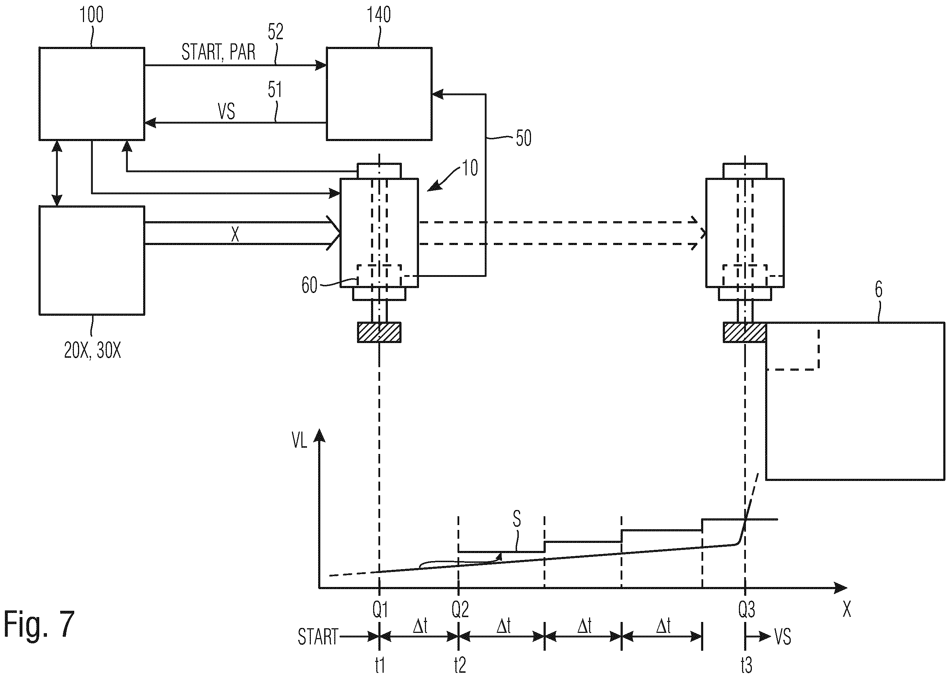

Figur 7 zeigt ein Ausführungsbeispiel zur Verwendung einer erfindungsgemäßen Vorrichtung in Verbindung mit einer Werkzeugmaschine und einem Rechner 140.

In diesem Ausführungsbeispiel sind die Verlagerungswerte VL driftbehaftet, d.h. der Verlauf der Verlagerungswerte VL zeigt auch im Leerlauf, während der Annäherung der Werkzeugspindel 10, bzw. des Werkzeugs 4 an das Werkstück 6, einen kontinuierlichen Anstieg.

In der Ausgangsposition befindet sich die Motorspindel 10 wiederum an der Position Q1. Zu einem Zeitpunkt t1 steuert das Steuergerät 100 den Spindelmotor 1 an, so dass dieser rotiert. Die Drehzahlregelung erfolgt mit Hilfe des Winkelmessgeräts 5, das die Winkelposition der Welle 2 misst. Außerdem signalisiert das Steuergerät 100 dem Antrieb 20X, die Motorspindel 10 in Bewegungsrichtung X auf das Werkstück 6 zuzubewegen und sendet den Startbefehl START an den Rechner 140.

Der Rechner 140 führt nun das in Verbindung mit Figur 4 beschriebene Verfahren aus, d.h. der Verlagerungsrechner 41 ermittelt kontinuierlich Verlagerungswerte VL und der Schwellenwertbestimmer 142 ermittelt hieraus einen ersten Schwellenwert S. Zu einem Zeitpunkt t2 an einer Position Q2 steht der Schwellenwert S zur Verfügung und im Vergleicher 43 erfolgt der Vergleich zwischen dem Schwellenwert S und den eintreffenden Verlagerungswerten VL.

Abweichend zu dem anhand von Figur 5 beschriebenen Ausführungsbeispiel ermittelt der Schwellenwertbestimmer 142 nun kontinuierlich in Zeitintervallen Δt erneut den Schwellenwert S und gibt den aktualisierten Schwellenwert S an den Vergleicher 43 aus. Auf diese Weise erfolgt der Vergleich immer mit einem Schwellenwert S, bei dem die Drift der Verlagerungswerte VL berücksichtigt ist.

Nahe einer Position Q3 kommt es schließlich zur Berührung zwischen Werkzeug 4 und Werkstück 6. Im Vergleich zum Anstieg des Verlaufs der Verlagerungswerte VL, der von der Drift verursacht wird, führt die hierbei auftretende Kraft F zu einem wesentlich steileren Anstieg des Verlaufs der Verlagerungswerte VL, der zum Zeitpunkt t3 an der Position Q3 den zu diesem Zeitpunkt verwendeten Schwellenwert S überschreitet. Dies führt wiederum zu einer Änderung des Status des Verlagerungssignals VS.

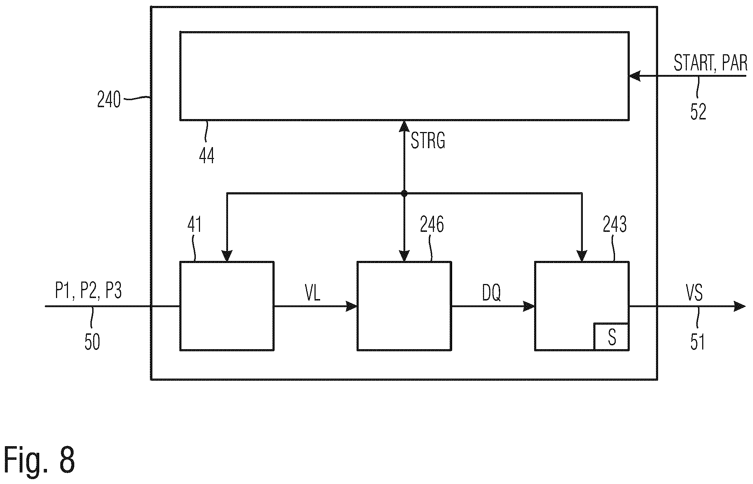

Figur 8 zeigt ein weiteres Ausführungsbeispiel eines Rechners 240. Er umfasst weiterhin den Verlagerungsrechner 41 und die Ablaufsteuerung 44. Abweichend zu den vorhergehenden Ausführungsformen weist der Rechner 240 nun einen Differenzierer 246, der den Differenzenquotienten DQ aufeinanderfolgend eintreffender Verlagerungswerte VL und dem zeitlichen Abstand ihres Eintreffens beim Differenzierer 246 berechnet und an einen Vergleicher 243 ausgibt.

Der Vergleicher 243 vergleicht wiederum eintreffende Differenzenquotienten DQ mit einem geeigneten Schwellenwert S, der im Vergleicher 243 in einem hierfür vorgesehenen Speicher gespeichert ist. Überschreitet ein Differenzenquotient DQ den Schwellwert S, so signalisiert dies der Vergleicher 243 durch den geänderten Status des Verlagerungssignals VS.

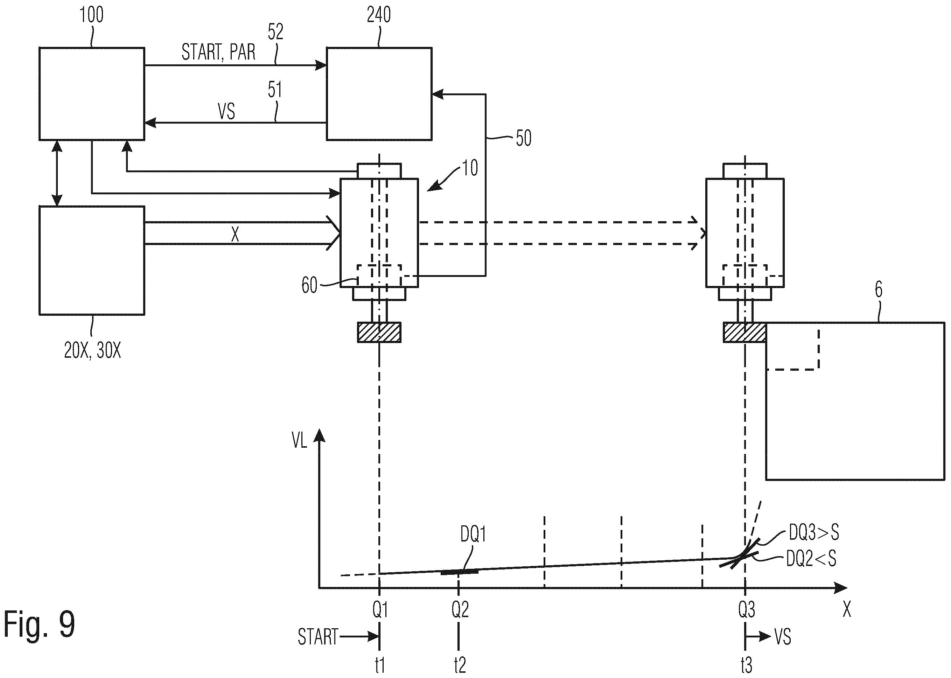

Figur 9 zeigt ein Ausführungsbeispiel zur Verwendung einer erfindungsgemäßen Vorrichtung in Verbindung mit einer Werkzeugmaschine und einem Rechner 240.

Auch in diesem Ausführungsbeispiel sind die Verlagerungswerte VL driftbehaftet und der Verlauf der Verlagerungswerte VL zeigt bereits im Leerlauf, während der Annäherung der Werkzeugspindel 10, bzw. des Werkzeugs 4 an das Werkstück 6, einen kontinuierlichen Anstieg.

An der Position Q1 zum Zeitpunkt t1 trifft der Startbefehl START beim Rechner 240 ein und das Steuergerät 100 steuert den Spindelmotor 1 an, so dass dieser rotiert. Außerdem signalisiert das Steuergerät 100 dem Antrieb 20X, die Motorspindel 10 in Bewegungsrichtung X auf das Werkstück 6 zuzubewegen. Der Verlagerungsrechner 41 beginnt daraufhin, in konstanten Zeitabständen Verlagerungswerte VL zu generieren und führt diese dem Differenzierer 246 zu. Der Differenzierer 246 bildet kontinuierlich den Differenzenquotienten DQ auf aufeinanderfolgend eintreffenden Verlagerungswerten VL und dem zeitlichen Abstand ihres Eintreffens.

Im Leerlauf, also während der Annäherung des Werkzeugs 4 an das Werkstück 6, beispielsweise ermittelt zum Zeitpunkt t2 an der Position Q2, ist der Differenzenquotient DQ (an der dargestellten Position DQ1) weitgehend konstant.

Kommt es zur Berührung des Werkzeugs 4 mit dem Werkstück 6, dann kommt es zu einem Anstieg des Verlaufs der Verlagerungswerte VL und damit auch zu einem Anstieg der Differenzenquotienten DQ. Im dargestellten Beispiel ist der Differenzenquotient DQ2, berechnet kurz vor der Position Q3, noch unterhalb des Schwellwertes S, zum Zeitpunkt t3 an der Position Q3 übersteigt er den Schwellwert S und der Vergleicher 243 ändert wieder den Status des Verlagerungssignals VS.

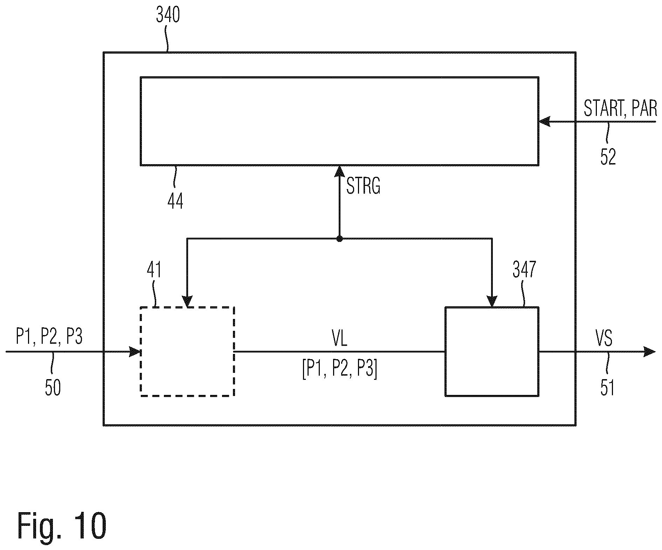

Figur 10 zeigt ein weiteres Ausführungsbeispiel eines Rechners 340. Er umfasst neben dem (in diesem Beispiel optionalen) Verlagerungsrechner 41 und der Ablaufsteuerung 44 einen Frequenzanalysator 347.

Der Frequenzanalysator 347 ist geeignet ausgestaltet, den Verlauf von Verlagerungswerten VL, die vom Verlagerungsrechner 41 eintreffen, im Frequenzbereich auszuwerten. Hier können mathematische Verfahren wie Fourier Analyse (FFT, DFT, Goertzel-Algorithmus, etc.), Ordnungsanalyse, sowie adaptive Filterung zum Einsatz kommen.

Eine Auswertung der Verlagerungswerte VL im Frequenzbereich ist besonders vorteilhaft, wenn als Werkzeug 4 ein Werkzeug mit geometrisch bestimmten Schneiden zum Einsatz kommt, beispielsweise ein Fräser. Kommt es bei rotierender Welle 2 zur Berührung zwischen Werkzeug 4 und Werkstück 6, so verursacht jede Schneide beim Eintauchen in das Werkstück 6 eine signifikante Auslenkung der Welle 2. Durch gezielte Auswertung der spektralen Leistungsdichte von Frequenzbändern, die von der Drehzahl der Welle 2 und der Anzahl der Schneiden des Werkzeugs 4 abhängig sind, ist somit der Kontakt zwischen Werkzeug 4 und Werkstück 6 nachweisbar. Das Ergebnis der Auswertung kann wiederum durch den Status des Verlagerungssignals VS ausgegeben werden.

Optional kann in diesem Ausführungsbeispiel auch auf den Verlagerungsrechner 41 verzichtet werden, so dass die Positionswerte P1, P2, P3 direkt dem Frequenzanalysator 347 zugeführt sind. Dem liegt die Erkenntnis zugrunde, dass sich bei rotierender Welle 2 in Folgen von Positionswerten P1, P2, P3 jedes einzelnen Positionsaufnehmers 64, 65, 66, die in zeitlich gleichen Abständen gemessen werden, Auslenkungen der Welle 2 in Form einer Variation der Positionsdifferenz aufeinanderfolgend gemessener Positionswerte auswirken. Diese Variation der Positionsdifferenz ist wiederum im Frequenzspektrum nachweisbar.

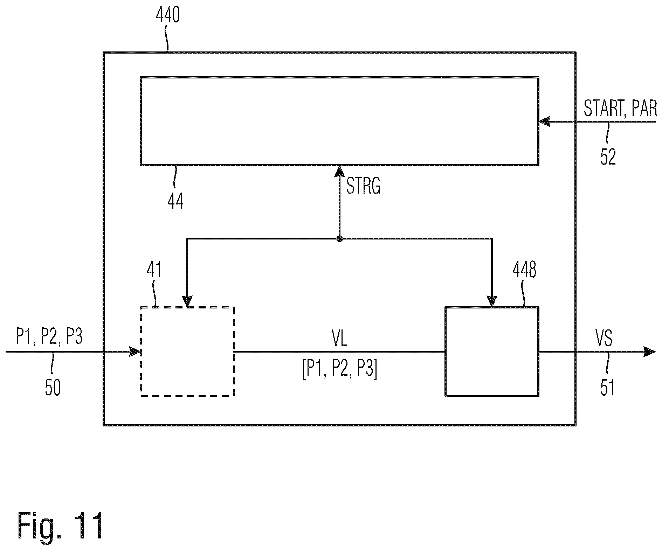

Figur 11 zeigt ein weiteres Ausführungsbeispiel eines Rechners 440. Er umfasst neben dem (optionalen) Verlagerungsrechner 41 und der Ablaufsteuerung 44 ein KI-Modul 448.

Das KI-Modul 448 ist geeignet ausgestaltet, um den Verlauf von Verlagerungswerten VL, die vom Verlagerungsrechner 41 eintreffen, mit Hilfe von Methoden der künstlichen Intelligenz, beispielsweise durch Vergleich mit vorab ermittelten Mustern ("machine teaching") auszuwerten und so den Kontakt zwischen Werkzeug 4 und Werkstück 6 zu erkennen. Mit Vorteil ist das KI-Modul selbstlernend, so dass die Erkennung von Kontaktvorgängen kontinuierlich verbessert wird.

In einer Variante dieses Ausführungsbeispiels kann auf den Verlagerungsrechner 41 verzichtet werden, so dass auch hier, wie im vorhergehenden Beispiel, die Positionswerte P1, P2, P3 direkt dem KI-Modul 448 zugeführt sind und deren zeitlicher Verlauf ausgewertet wird.

Wird die Berührung zwischen Werkzeug 4 und Werkstück 6 erkannt, wird dies wieder mit dem Verlagerungssignal VS signalisiert.

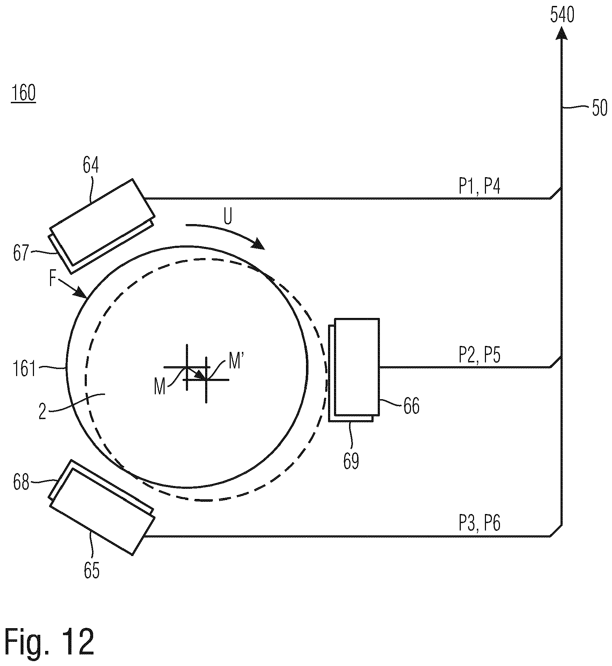

Figur 12 zeigt ein weiteres Ausführungsbeispiel einer Messanordnung 160. Sie umfasst eine Messteilung 161, sowie sechs Positionsaufnehmer 64-69.

Die Messteilung 161 ist wiederum drehfest auf der Welle 2 angeordnet, so dass sie mit dieser rotiert.

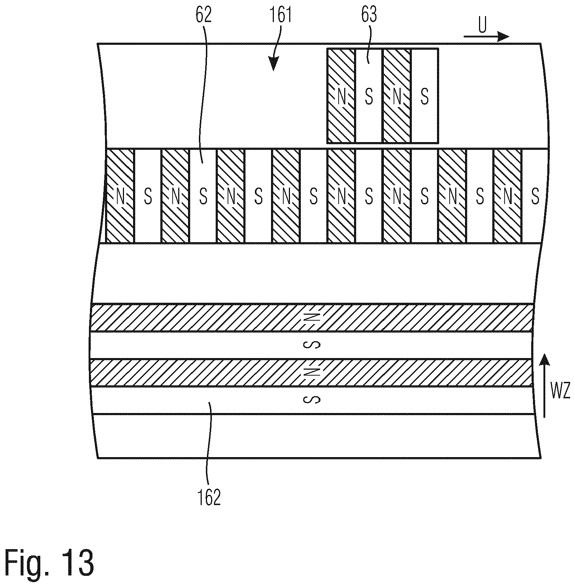

Figur 13 zeigt eine geeignete Messteilung 161. Sie weist, analog zu der in Figur 3 dargestellten Messteilung 61, eine Teilungsspur 62 und, optional, eine Referenzspur 63 auf. Zusätzlich weist die Messteilung 161 jetzt eine zweite Teilungsspur 162 auf, deren Codeelemente ringförmig um den Umfang der Welle 2 angeordnet sind. Diese Anordnung ermöglicht eine Messung der Verlagerung der Welle 2 in deren Achsrichtung WZ.

Im Ausführungsbeispiel in Figur 12 sind neben den Positionsaufnehmern 64, 65, 66, die zur Abtastung der Teilungsspur 62 und ggf. der Referenzspur 63 vorgesehen sind, weitere Positionsaufnehmer 67, 68, 69 zur Abtastung der zweiten Teilungsspur 162 vorgesehen. Auch diese sind in regelmäßigen Winkelabständen in Umfangsrichtung der Welle 2 angeordnet, d.h. in einem Winkelabstand von 120°.

Bewirkt nun die Kraft F neben der Verschiebung der Welle 2 (und damit der Teilungsspur 62) senkrecht zur Achsrichtung (messbar mit den Positionsaufnehmern 64, 65, 66 durch Abtastung der Teilungsspur 62) auch noch eine Verkippung der Welle 2, also eine Drehung quer zur Achsrichtung, so ist diese mit den Positionsaufnehmern 67, 68, 69 durch Abtastung der zweiten Teilungsspur 162 messbar.

Die gezeigte Anordnung der Positionsaufnehmer 67, 68, 69 zur Abtastung der zweiten Teilungsspur 162 wird als besonders vorteilhaft angesehen, da durch die Auswertung der drei Positionswerte P4, P5, P6 reine Bewegungen der Welle 2 in Achsrichtung WZ und Verkippungen der Welle 2 eindeutig unterscheidbar und somit getrennt voneinander auswertbar sind. Sollen beispielsweise ausschließlich Bewegungen (Verlagerungen) der Welle 2 in Achsrichtung WZ erfasst werden, so ist hierfür bereits einer der Positionsaufnehmer 67, 68, 69, angeordnet an einer beliebigen Stelle des Umfangs, ausreichend.

Anstelle von zwei getrennten Teilungsspuren 62, 162 kann auch nur eine Teilungsspur vorgesehen sein, deren Codeelemente so ausgestaltet sind, dass sowohl eine Messung der Winkelposition der Welle 2, als auch deren Verschiebung in Achsrichtung WZ messbar ist. Dies gelingt beispielsweise dann, wenn die Codeelemente der Teilungsspur 62 in Form eines Fischgrätmusters angeordnet sind. Die vollständige Erfassung aller Verlagerungsrichtungen kann auch bei einer derartigen Teilungsspur durch sechs geeignet ausgestaltete Positionsaufnehmer 64-69 erfolgen.

Die von den Positionsaufnehmern 64-69 generierten Positionswerte P1-P6 sind über den Signalübertragungskanal 50 einem Rechner 540 zuführbar.

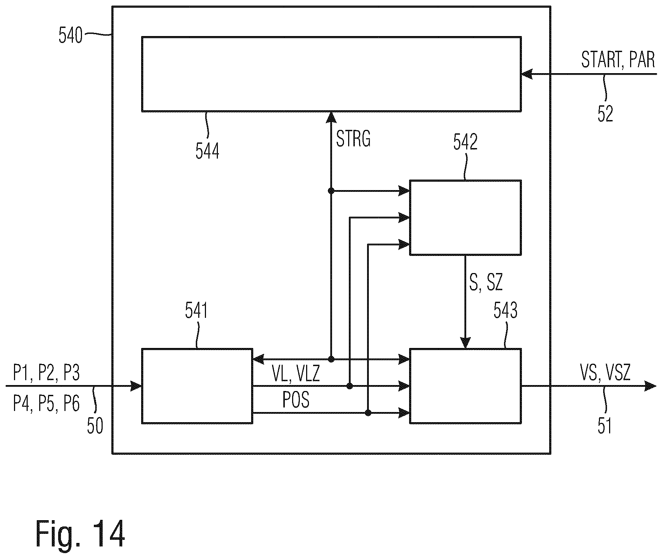

Figur 14 zeigt ein weiteres Ausführungsbeispiel eines Rechners 540. Analog zum in Verbindung mit Figur 4 beschriebenen Rechner 40 weist der Rechner 540 einen Verlagerungsrechner 541, einen Schwellenwertbestimmer 542, einen Vergleicher 543 und eine Ablaufsteuerung 544 auf.

Der Verlagerungsrechner 541 ermittelt weiterhin in konstanten zeitlichen Abständen Verlagerungswerte VL, die eine Auslenkung der Welle 2 in einer Ebene senkrecht zur Achsrichtung angeben. Darüber hinaus ermittelt der Verlagerungsrechner basierend auf den Positionswerten P4, P5, P6, die aus der Abtastung der zweiten Teilungsspur 162 mit den Positionsaufnehmern 67, 68, 69 resultieren, zweite Verlagerungswerte VLZ, die eine Verlagerung der Welle 2 in Achsrichtung WZ angeben.

Der Schwellenwertbestimmer 542 bestimmt neben dem Schwellenwert S einen zweiten Schwellenwert SZ, basierend auf zweiten Verlagerungswerten VLZ. Der zweite Schwellenwert SZ ist wiederum so bestimmt, dass er im Leerlauf mit aktuell eintreffenden zweiten Verlagerungswerten VLZ nicht überschritten wird.

Der Schwellenwert S und der zweite Schwellenwert SZ sind dem Vergleicher 543 zugeführt, der durch Vergleich mit aktuell eintreffenden Verlagerungswerten VL, bzw. zweiten Verlagerungswerten VLZ prüft, ob sich die Welle 2 im Leerlauf befindet, oder nicht. Das Ergebnis der Vergleiche gibt der Vergleicher 543 durch das Verlagerungssignal VS und ein zweites Verlagerungssignal VSZ aus.

Analog hierzu können auch die weiteren Ausführungsformen von Rechnern 140, 240, 340, 440 geeignet erweitert werden, um die Positionswerte P1, P2, P3, P4, P5, P6 der Messanordnung 160 auszuwerten.

## Patentansprüche

1. Vorrichtung zur Feststellung einer Berührung zwischen einem Werkzeug (4) und einem Werkstück (6) in einer Werkzeugmaschine, bei der das Werkzeug (4) und das Werkstück (6) relativ zueinander bewegbar sind und das Werkzeug (4) oder das Werkstück (6) drehfest mit einer Welle (2) verbunden ist, umfassend eine Messanordnung (60, 160) mit einer drehfest auf der Welle (2) angeordneten Messteilung (61, 161) und wenigstens einen Positionsaufnehmer (64, 65, 66, 67, 68, 69), der in Bezug auf die Welle (2) feststehend angeordnet ist, und einen Rechner (40, 140, 240, 340, 440, 540), wobei
• der wenigstens eine Positionsaufnehmer (64, 65, 66, 67, 68, 69) geeignet ausgestaltet ist, die Messteilung (61, 161) abzutasten und hieraus Positionswerte (P1, P2, P3, P4, P5, P6) zu generieren, die eine Position der Welle (2) angeben,
• die Positionswerte (P1, P2, P3, P4, P5, P6) dem Rechner (40, 140, 240, 340, 440, 540) zugeführt sind, der Mittel umfasst, die durch Auswertung eines Verlaufs der Positionswerte (P1, P2, P3, P4, P5, P6) die Berührung zwischen Werkzeug (4) und Werkstück (6) feststellen und das Ergebnis der Auswertung über den Status eines Verlagerungssignals (VS) signalisieren.

2. Vorrichtung nach Anspruch 1, wobei die Messteilung (61, 161) eine Teilungsspur (62) aufweist, deren Codeelemente in Umfangsrichtung der Welle (2) angeordnet sind.

3. Vorrichtung nach Anspruch 2, wobei die Messteilung (161) weiter eine zweite Teilungsspur (162) aufweist, deren Codeelemente ringförmig um den Umfang der Welle (2) angeordnet sind.

4. Vorrichtung nach einem der vorhergehenden Ansprüche, wobei die Mittel im Rechner (40, 140, 240, 340, 440, 540) einen Verlagerungsrechner (41) umfassen, der aus den Positionswerten (P1, P2, P3, P4, P5, P6) Verlagerungswerte (VL) bestimmt, die eine Auslenkung der Welle (2) aus einer Ruhelage angeben.

5. Vorrichtung nach Anspruch 4, wobei die Mittel im Rechner (40, 140, 240, 340, 440, 540) weiter umfassen:
• einen Schwellenwertbestimmer (42, 142), ausgestaltet zum Bestimmen eines Schwellenwertes (S) der eintreffenden Verlagerungswerte (VL) im Leerlauf und ohne Berührung zwischen Werkzeug (4) und Werkstück (6), sowie einen Vergleicher (43) zum Vergleich des Schwellenwertes (S) mit aktuell eintreffenden Verlagerungswerten (VL), oder/und
• einen Differenzierer (246), ausgestaltet zur Bildung des Differenzenquotienten (DQ) aufeinanderfolgend eintreffender Verlagerungswerte (VL) und einen Vergleicher (243) zum Vergleich der Differenzenquotienten (DQ) mit vorab gespeicherten Schwellenwerten (S), oder/und
• einen Frequenzanalysator (347), der den Verlauf der Verlagerungswerte (VL) im Frequenzbereich auswertet, oder/und
• ein KI-Modul (448), das den Verlauf der Verlagerungswerte (VL) mit Methoden der künstlichen Intelligenz, insbesondere durch Mustererkennung, auswertet.

6. Vorrichtung nach einem der vorhergehenden Ansprüche, wobei die Mittel im Rechner (340, 440)
• einen Frequenzanalysator (347), der einen Verlauf der Positionswerte (P1, P2, P3, P4, P5, P6) im Frequenzbereich auswertet, oder/und
• ein KI-Modul (448), das einen Verlauf der Positionswerte (P1, P2, P3, P4, P5, P6) mit Methoden der künstlichen Intelligenz, insbesondere durch Mustererkennung, auswertet,
umfassen.

7. Verfahren zur Feststellung einer Berührung zwischen einem Werkzeug (4) und einem Werkstück (6) in einer Werkzeugmaschine, bei der das Werkzeug (4) und das Werkstück (6) relativ zueinander bewegbar sind und das Werkzeug (4) oder das Werkstück (6) drehfest mit einer Welle (2) verbunden ist, mit einer Vorrichtung, umfassend eine Messanordnung (60, 160) mit einer drehfest auf der Welle (2) angeordneten Messteilung (61, 161) und wenigstens einen Positionsaufnehmer (64, 65, 66, 67, 68, 69), der in Bezug auf die Welle (2) feststehend angeordnet ist, und einen Rechner (40, 140, 240, 340, 440, 540), wobei
• die Messteilung (61, 161) von dem wenigstens einen Positionsaufnehmer (64, 65, 66, 67, 68, 69) abgetastet wird und hieraus Positionswerte (P1, P2, P3, P4, P5, P6) generiert werden, die eine Position der Welle (2) angeben,
• die Positionswerte (P1, P2, P3, P4, P5, P6) dem Rechner (40, 140, 240, 340, 440, 540) zugeführt werden, der Mittel umfasst, mit denen durch Auswertung eines Verlaufs der Positionswerte (P1, P2, P3, P4, P5, P6) die Berührung zwischen Werkzeug (4) und Werkstück (6) festgestellt und das Ergebnis der Auswertung über den Status eines Verlagerungssignals (VS) signalisiert wird.

8. Verfahren nach Anspruch 7, wobei die Mittel im Rechner (40, 140, 240, 340, 440, 540) einen Verlagerungsrechner (41) umfassen, mit dem aus den Positionswerten (P1, P2, P3, P4, P5, P6) Verlagerungswerte (VL) bestimmt werden, die eine Auslenkung der Welle (2) aus einer Ruhelage angeben.

9. Verfahren nach Anspruch 8, wobei die Mittel im Rechner (40, 140, 240, 340, 440, 540) weiter umfassen:
• einen Schwellenwertbestimmer (42, 142), mit dem ein Schwellenwert (S) der eintreffenden Verlagerungswerte (VL) im Leerlauf und ohne Berührung zwischen Werkzeug (4) und Werkstück (6) bestimmt wird, sowie einen Vergleicher (43) mit dem der Schwellenwert (S) mit aktuell eintreffenden Verlagerungswerten (VL) verglichen wird, oder/und
• einen Differenzierer (246), mit dem Differenzenquotienten (DQ) aufeinanderfolgend eintreffender Verlagerungswerte (VL) gebildet werden und einen Vergleicher (243), mit dem die Differenzenquotienten (DQ) mit vorab gespeicherten Schwellenwerten (S) verglichen werden, oder/und
• einen Frequenzanalysator (347), mit dem der Verlauf der Verlagerungswerte (VL) im Frequenzbereich auswertet wird, oder/und
• ein KI-Modul (448), mit dem der Verlauf der Verlagerungswerte (VL) mit Methoden der künstlichen Intelligenz, insbesondere durch Mustererkennung, auswertet wird.

10. Verfahren nach Anspruch 7, wobei die Mittel im Rechner (340, 440)
• einen Frequenzanalysator (347), mit dem der Verlauf der Positionswerte (P1, P2, P3, P4, P5, P6) im Frequenzbereich auswertet wird, oder/und
• ein KI-Modul (448), mit dem der Verlauf der Positionswerte (P1, P2, P3, P4, P5, P6) mit Methoden der künstlichen Intelligenz, insbesondere durch Mustererkennung, auswertet wird,
umfassen.

11. Verfahren nach einem der Ansprüche 7 bis 10, wobei das Verfahren durch einen Startbefehl (START) gestartet wird, der dem Rechner (40, 140, 240, 340, 440, 540) über einen Befehlskanal (52) zugeführt wird.

12. Verfahren nach einem der Ansprüche 7 bis 11, wobei das Verfahren bei rotierender Welle (2) durchgeführt wird.

13. Werkzeugmaschine, ausgestattet mit einer Vorrichtung nach einem der Ansprüche 1 bis 6.

## Claims

1. Device for determining contact between a tool (4) and a workpiece (6) in a machine tool, wherein the tool (4) and the workpiece (6) are able to be moved relative to one another, and the tool (4) or the workpiece (6) is connected to a shaft (2) in a rotationally fixed manner, comprising a measurement arrangement (60, 160) having a measurement graduation (61, 161) arranged on the shaft (2) in a rotationally fixed manner, and at least one position encoder (64, 65, 66, 67, 68, 69) arranged in a stationary manner with respect to the shaft (2), and a computer (40, 140, 240, 340, 440, 540), wherein
• the at least one position encoder (64, 65, 66, 67, 68, 69) is designed so as to be suitable for scanning the measurement graduation (61, 161) and for generating therefrom position values (P1, P2, P3, P4, P5, P6) which indicate a position of the shaft (2),
• the position values (P1, P2, P3, P4, P5, P6) are supplied to the computer (40, 140, 240, 340, 440, 540), which comprises means which determine the contact between the tool (4) and the workpiece (6) by evaluating a progression of the position values (P1, P2, P3, P4, P5, P6) and signal the result of the evaluation by way of the status of a displacement signal (VS).

2. Device according to Claim 1, wherein the measurement graduation (61, 161) comprises a graduation track (62) whose code elements are arranged in a circumferential direction of the shaft (2).

3. Device according to Claim 2, wherein the measurement graduation (161) furthermore comprises a second graduation track (162) whose code elements are arranged annually about the circumference of the shaft (2).

4. Device according to any one of the preceding claims, wherein the means in the computer (40, 140, 240, 340, 440, 540) comprise a displacement calculator (41) which determines from the position values (P1, P2, P3, P4, P5, P6) displacement values (VL) which indicate a deflection of the shaft (2) from a rest position.

5. Device according to Claim 4, wherein the means in the computer (40, 140, 240, 340, 440, 540) furthermore comprise:
• a threshold value determiner (42, 142) designed to determine a threshold value (S) of the incoming displacement values (VL) while idling and without contact between the tool (4) and the workpiece (6), and a comparator (43) for comparing the threshold value (S) with currently arriving displacement values (VL), or/and
• a differentiator (246) designed to form the differential quotient (DQ) of successively arriving displacement values (VL), and a comparator (243) for comparing the differential quotients (DQ) with previously stored threshold values (S), or/and
• a frequency analyser (347) which evaluates the progression of the displacement values (VL) in the frequency range, or/and
• a KI module (448) which evaluates the progression of the displacement values (VL) using artificial intelligence methods, in particular by way of pattern recognition.

6. Device according to any one of the preceding claims, wherein the means in the computer (340, 440) comprise
• a frequency analyser (347) which evaluates a progression of the position values (P1, P2, P3, P4, P5, P6) in the frequency range, or/and
• a KI module (448) which evaluates a progression of the position values (P1, P2, P3, P4, P5, P6) using artificial intelligence methods, in particular by way of pattern recognition.

7. Method for determining contact between a tool (4) and a workpiece (6) in a machine tool, wherein the tool (4) and the workpiece (6) are able to be moved relative to one another and the tool (4) or the workpiece (6) is connected to a shaft (2) in a rotationally fixed manner, using a device comprising a measurement arrangement (60, 160) having a measurement graduation (61, 161) arranged on the shaft (2) in a rotationally fixed manner, and at least one position encoder (64, 65, 66, 67, 68, 69) arranged in a stationary manner with respect to the shaft (2), and a computer (40, 140, 240, 340, 440, 540), wherein
• the measurement graduation (61, 161) is scanned by the at least one position encoder (64, 65, 66, 67, 68, 69) and position values (P1, P2, P3, P4, P5, P6) which indicate a position of the shaft (2) are generated therefrom,
• the position values (P1, P2, P3, P4, P5, P6) are supplied to the computer (40, 140, 240, 340, 440, 540), which comprises means which are used to determine the contact between the tool (4) and the workpiece (6) by evaluating a progression of the position values (P1, P2, P3, P4, P5, P6) and to signal the result of the evaluation by way of the status of a displacement signal (VS).

8. Method according to Claim 7, wherein the means in the computer (40, 140, 240, 340, 440, 540) comprise a displacement calculator (41) which is used to determine from the position values (P1, P2, P3, P4, P5, P6) displacement values (VL) which indicate a deflection of the shaft (2) from a rest position.

9. Method according to Claim 8, wherein the means in the computer (40, 140, 240, 340, 440, 540) furthermore comprise:
• a threshold value determiner (42, 142) which is used to determine a threshold value (S) of the incoming displacement values (VL) while idling and without contact between the tool (4) and the workpiece (6), and a comparator (43) which is used to compare the threshold value (S) with currently arriving displacement values (VL), or/and
• a differentiator (246) which is used to form differential quotients (DQ) of successively arriving displacement values (VL), and a comparator (243) which is used to compare the differential quotients (DQ) with previously stored threshold values (S), or/and
• a frequency analyser (347) which is used to evaluate the progression of the displacement values (VL) in the frequency range, or/and
• a KI module (448) which is used to evaluate the progression of the displacement values (VL) using artificial intelligence methods, in particular by way of pattern recognition.

10. Method according to Claim 7, wherein the means in the computer (340, 440) comprise
• a frequency analyser (347) which is used to evaluate the progression of the position values (P1, P2, P3, P4, P5, P6) in the frequency range, or/and
• a KI module (448) which is used to evaluate the progression of the position values (P1, P2, P3, P4, P5, P6) using artificial intelligence methods, in particular by way of pattern recognition.

11. Method according to any one of Claims 7 to 10, wherein the method is started by a start command (START) which is supplied to the computer (40, 140, 240, 340, 440, 540) via a command channel (52).

12. Method according to any one of Claims 7 to 11, wherein the method is carried out while the shaft (2) is rotating.

13. Machine tool, provided with a device according to any one of Claims 1 to 6.

## Revendications

1. Dispositif permettant de constater un contact entre un outil (4) et une pièce (6) dans une machine-outil dans laquelle l'outil (4) et la pièce (6) sont mobiles l'un par rapport à l'autre, et l'outil (4) ou la pièce (6) est relié(e) de manière solidaire en rotation à un arbre (2), comprenant un agencement de mesure (60, 160) pourvu d'une graduation de mesure (61, 161) disposée de manière solidaire en rotation sur l'arbre (2), et au moins un capteur de position (64, 65, 66, 67, 68, 69) qui est disposé de manière stationnaire par rapport à l'arbre (2), et un calculateur (40, 140, 240, 340, 440, 540), dans lequel
• ledit au moins un capteur de position (64, 65, 66, 67, 68, 69) est configuré de manière adéquate pour balayer la graduation de mesure (61, 161) et pour générer à partir de celle-ci des valeurs de position (P1, P2, P3, P4, P5, P6) qui indiquent une position de l'arbre (2),
• les valeurs de position (P1, P2, P3, P4, P5, P6) sont amenées au calculateur (40, 140, 240, 340, 440, 540) qui comprend des moyens qui constatent par l'évaluation d'une courbe des valeurs de position (P1, P2, P3, P4, P5, P6) le contact entre l'outil (4) et la pièce (6) et signalent le résultat de l'évaluation par l'intermédiaire de l'état d'un signal de déplacement (VS).

2. Dispositif selon la revendication 1, dans lequel la graduation de mesure (61, 161) présente une piste de graduation (62) dont les éléments de code sont disposés dans la direction circonférentielle de l'arbre (2).

3. Dispositif selon la revendication 2, dans lequel la graduation de mesure (161) présente en outre une deuxième piste de graduation (162) dont les éléments de code sont disposés en forme d'anneau autour de la circonférence de l'arbre (2).

4. Dispositif selon l'une quelconque des revendications précédentes, dans lequel les moyens dans le calculateur (40, 140, 240, 340, 440, 540) comprennent un calculateur de déplacement (41) qui détermine à partir des valeurs de position (P1, P2, P3, P4, P5, P6) des valeurs de déplacement (VL) qui indiquent une déviation de l'arbre (2) par rapport à une position de repos.

5. Dispositif selon la revendication 4, dans lequel les moyens dans le calculateur (40, 140, 240, 340, 440, 540) comprennent en outre :
• un dispositif de détermination de valeur seuil (42, 142) configuré pour déterminer une valeur seuil (S) des valeurs de déplacement entrantes (VL) au ralenti et sans contact entre l'outil (4) et la pièce (6), ainsi qu'un comparateur (43) pour comparer la valeur seuil (S) avec des valeurs de déplacement actuellement entrantes (VL), ou/et
• un différenciateur (246) configuré pour former le quotient de différence (DQ) des valeurs de déplacement (VL) entrant consécutivement, et un comparateur (243) pour comparer les quotients de différence (DQ) avec des valeurs seuil (S) mémorisées au préalable, ou/et
• un analyseur de fréquence (347) qui évalue la courbe des valeurs de déplacement (VL) dans la plage de fréquence, ou/et
• un module d'IA (448) qui évalue la courbe des valeurs de déplacement (VL) par des méthodes d'intelligence artificielle, en particulier par reconnaissance de modèle.

6. Dispositif selon l'une quelconque des revendications précédentes, dans lequel les moyens dans le calculateur (340, 440) comprennent
• un analyseur de fréquence (347) qui évalue une courbe des valeurs de position (P1, P2, P3, P4, P5, P6) dans la plage de fréquence, ou/et
• un module d'IA (448) qui évalue une courbe des valeurs de position (P1, P2, P3, P4, P5, P6) par des méthodes d'intelligence artificielle, en particulier par reconnaissance de modèle.

7. Procédé permettant de constater un contact entre un outil (4) et une pièce (6) dans une machine-outil dans laquelle l'outil (4) et la pièce (6) sont mobiles l'un par rapport à l'autre, et l'outil (4) ou la pièce (6) est relié(e) de manière solidaire en rotation à un arbre (2), avec un dispositif comprenant un agencement de mesure (60, 160) pourvu d'une graduation de mesure (61, 161) disposée de manière solidaire en rotation sur l'arbre (2), et au moins un capteur de position (64, 65, 66, 67, 68, 69) qui est disposé de manière stationnaire par rapport à l'arbre (2), et un calculateur (40, 140, 240, 340, 440, 540), dans lequel
• la graduation de mesure (61, 161) est balayée par ledit au moins un capteur de position (64, 65, 66, 67, 68, 69) et à partir de celle-ci des valeurs de position (P1, P2, P3, P4, P5, P6) sont générées qui indiquent une position de l'arbre (2),
• les valeurs de position (P1, P2, P3, P4, P5, P6) sont amenées au calculateur (40, 140, 240, 340, 440, 540) qui comprend des moyens qui constatent le contact entre l'outil (4) et la pièce (6) par l'évaluation d'une courbe des valeurs de position (P1, P2, P3, P4, P5, P6), et signalent le résultat de l'évaluation par l'intermédiaire de l'état d'un signal de déplacement (VS).

8. Procédé selon la revendication 7, dans lequel les moyens dans le calculateur (40, 140, 240, 340, 440, 540) comprennent un calculateur de déplacement (41) qui détermine à partir des valeurs de position (P1, P2, P3, P4, P5, P6) des valeurs de déplacement (VL) qui indiquent une déviation de l'arbre (2) par rapport à une position de repos.

9. Procédé selon la revendication 8, dans lequel les moyens dans le calculateur (40, 140, 240, 340, 440, 540) comprennent en outre :
• un dispositif de détermination de valeur seuil (42, 142) qui détermine une valeur seuil (S) des valeurs de déplacement entrantes (VL) au ralenti et sans contact entre l'outil (4) et la pièce (6), ainsi qu'un comparateur (43) qui compare la valeur seuil (S) avec des valeurs de déplacement actuellement entrantes (VL), ou/et
• un différenciateur (246) qui forme des quotients de différence (DQ) des valeurs de déplacement (VL) entrant consécutivement, et un comparateur (243) qui compare les quotients de différence (DQ) avec des valeurs seuil (S) mémorisées au préalable, ou/et
• un analyseur de fréquence (347) qui évalue la courbe des valeurs de déplacement (VL) dans la plage de fréquence, ou/et
• un module d'IA (448) qui évalue la courbe des valeurs de déplacement (VL) par des méthodes d'intelligence artificielle, en particulier par reconnaissance de modèle.

10. Procédé selon la revendication 7, dans lequel les moyens dans le calculateur (340, 440) comprennent
• un analyseur de fréquence (347) qui évalue une courbe des valeurs de position (P1, P2, P3, P4, P5, P6) dans la plage de fréquence, ou/et
• un module d'IA (448) qui évalue la courbe des valeurs de position (P1, P2, P3, P4, P5, P6) par des méthodes d'intelligence artificielle, en particulier par reconnaissance de modèle.

11. Procédé selon l'une quelconque des revendications 7 à 10, dans lequel le procédé est démarré par une instruction de démarrage (START) qui est amenée au calculateur (40, 140, 240, 340, 440, 540) par l'intermédiaire d'un canal d'instructions (52).

12. Procédé selon l'une quelconque des revendications 7 à 11, dans lequel le procédé est exécuté lorsque l'arbre (2) tourne.

13. Machine-outil, équipée d'un dispositif selon l'une quelconque des revendications 1 à 6.
